# EUROPEAN PATENT APPLICATION

(11) **EP 3 179 386 A1**
(43) Date of publication of application: **14.06.2017**
(21) Application number: 16201609.1
(22) Date of filing: 01.12.2016
(51) Int. Cl.: G06F 17/30, G06Q 10/00, G11B 27/031

(54) **METHOD OF TRACKING LOCATIONS OF STORED ITEMS**

(30) Priority: 11.12.2015 US 201514965916
(71) Applicant: Leadot Innovation, Inc., 802 Kaohsiung (TW)
(72) Inventor: Wang, Justin, 106 Taipei City (TW)
(74) Representative: Becker Kurig Straus

(57) **Abstract**

A method of tracking locations of stored items is disclosed. The method includes taking a picture of a first room using a camera (14) of a mobile computing device (10) to create a first corresponding image depicting contents of items stored within the first room and the relative locations of the items stored within the first room, tapping on a first selected item depicted in the first corresponding image, and taking a detailed picture of the first selected item. The method further includes tapping on a second selected item depicted in the first corresponding image and taking a detailed picture of the second selected item. The method also includes storing the picture of the first room, the detailed picture of the first selected item, and the detailed picture of the second selected item in a storage device (20) of the mobile computing device (10).

## Description

### Field of the Invention

The invention relates to an organization method for tracking stored items, and more particularly, to a method of tracking stored items using an application on a mobile computing device for keeping a detailed record of stored items.

### Background of the Invention

As household items become more and more numerous, storage of these items becomes more important. Where to store and how to store the items becomes important. If there are too many items, it takes a great deal of time to search for a needed item. Thus, being organized with storing items can save much needed time over the long run.

### Summary of the Invention

The present invention aims at providing a method of tracking locations of stored items.

This is achieved by a method of tracking locations of stored items according to the claim 1. The dependent claims pertain to corresponding further developments and improvements.

As will be seen more clearly from the detailed description following below, the claimed method includes taking a picture of a first room using a camera of a mobile computing device to create a first corresponding image depicting contents of items stored within the first room and the relative locations of the items stored within the first room; tapping on a first selected item depicted in the first corresponding image; taking a detailed picture of the first selected item; tapping on a second selected item depicted in the first corresponding image; taking a detailed picture of the second selected item; and storing the picture of the first room, the detailed picture of the first selected item, and the detailed picture of the second selected item in a storage device of the mobile computing device.

### Brief Description of the Drawings

In the following, the invention is further illustrated by way of example, taking reference to the following drawings. Thereof:
Fig. 1 is a functional block diagram of a mobile computing device that is used for executing an application (app) for recording locations and descriptions of items in a hierarchal manner;
Fig. 2 is a sample folder structure showing a hierarchal approach to organizing items using a Smart Finding app;
Fig. 3 illustrates using the mobile computing device to take a picture of a room;
Fig. 4 illustrates taking a detailed picture of a dresser using the Smart Finding app;
Fig. 5 illustrates taking a detailed picture of a drawer using the Smart Finding app;
Fig. 6 is a flowchart describing the method of organizing items in a hierarchal manner using the Smart Finding app according to the present invention;
Fig. 7 is a functional block diagram illustrating interaction between the mobile computing device and a cloud database, and an identification service via a network;
Fig. 8 illustrates adding a new entry to the cloud database by taking multiple pictures of an item;
Fig. 9 shows the item being recognized after a file corresponding to the item is added to the cloud database;
Fig. 10 illustrates a table containing fields in the ID code;
Fig. 11 illustrates a table containing fields in the UID number;
Fig. 12 shows a method of identifying individual houses using either an IP address or a MAC address; and
Fig. 13 illustrates using an RFID scanner to search for a camera.

### Detailed Description

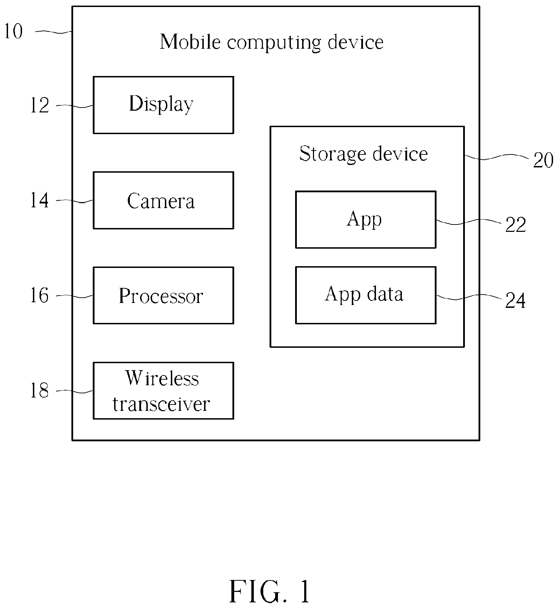

Please refer to Fig. 1. Fig. 1 is a functional block diagram of a mobile computing device 10 that is used for executing an application (app) 22 for recording locations and descriptions of items in a hierarchal manner. The app also allows a user to search for items that have been previously stored and recorded using the app. To provide a descriptive name for the app, the app will be referred to below as the Smart Finding app.

The mobile computing device 10 comprises a display 12 that is preferably a touchscreen, a camera 14, a processor 16, a wireless transceiver 18 such as a Wireless Fidelity (Wi-Fi) transceiver, and a storage device 20. The storage device 20 stores the Smart Finding app 22 as well as app data 24 that is used in conjunction with the Smart Finding app 22. The storage device 20 is preferably a non-volatile memory such as flash memory. The mobile computing device 10 may be any mobile device having both a display and a camera, such as a tablet computer or a smartphone, but other devices such as a notebook computer can be used as well.

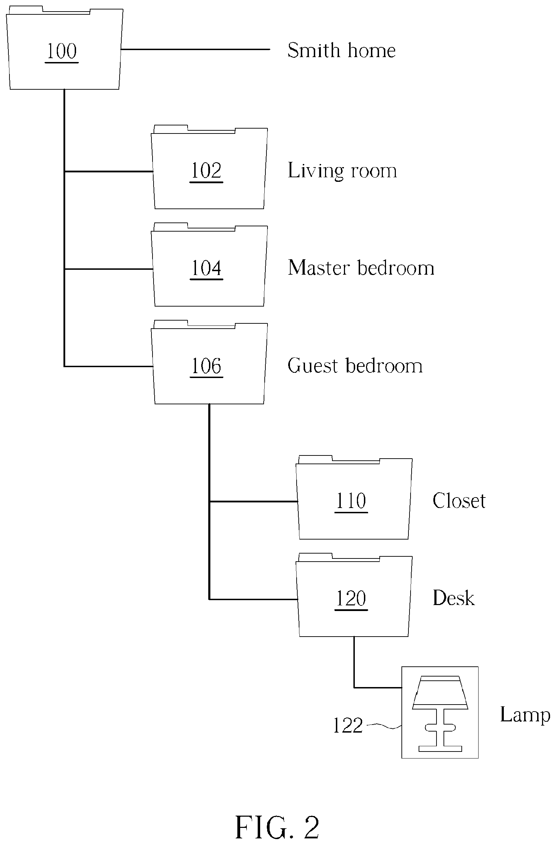

Please refer to Fig. 2. Fig. 2 is a sample folder structure showing a hierarchal approach to organizing items using the Smart Finding app 22. Any home, building, or even groups of buildings can be organized using a hierarchal structure. For instance, as shown in Fig. 2, the home belonging to the Smith family is shown as the top level, indicated by folder 100 corresponding to the "Smith home". The folder 100 is shown as containing three folders: folder 102 corresponding to "Living room", folder 104 corresponding to "Master bedroom", and folder 106 corresponding to "Guest bedroom". Of course, more than or fewer than three folders may be present within the folder 100, but three are shown for simplicity.

Taking the folder 106 as an example, the folder 106 is shown as containing two folders: folder 110 corresponding to "Closet" and folder 120 corresponding to "Desk". In other words, the "Guest bedroom" contains both the "Closet" and the "Desk". Folder 120 in turn contains file 122 corresponding to "Lamp". That is, the "Desk" contains the "Lamp". Additional folder levels could be illustrated to show individual drawers of the "Closet" or the "Desk", and there is no limit to the number of nested levels into which items can be categorized.

The Smart Finding app 22 works like a file management system in a typical modern computer operating system. Any house, building, room, or so on can be represented using a file structure. For example, for each room in a house, each of the rooms can be represented by a folder within the file structure for the house. A storage cabinet or a bookshelf can be represented by a subfolder within the folder corresponding to a room. Each household item is equivalent to a file within a folder. As described above, the file 122 corresponding to the "Lamp" is contained within the folder 120 corresponding to the "Desk". A file is created by taking at least one picture of a household item and then optionally labeling each item. The optional labeling can be done manually, or an identification service accessed through the "cloud" can be used for identifying and then labeling each item automatically. Once items have been properly labeled, when a user needs to locate an item later on, the user can search for the item using the Smart Finding app 22.

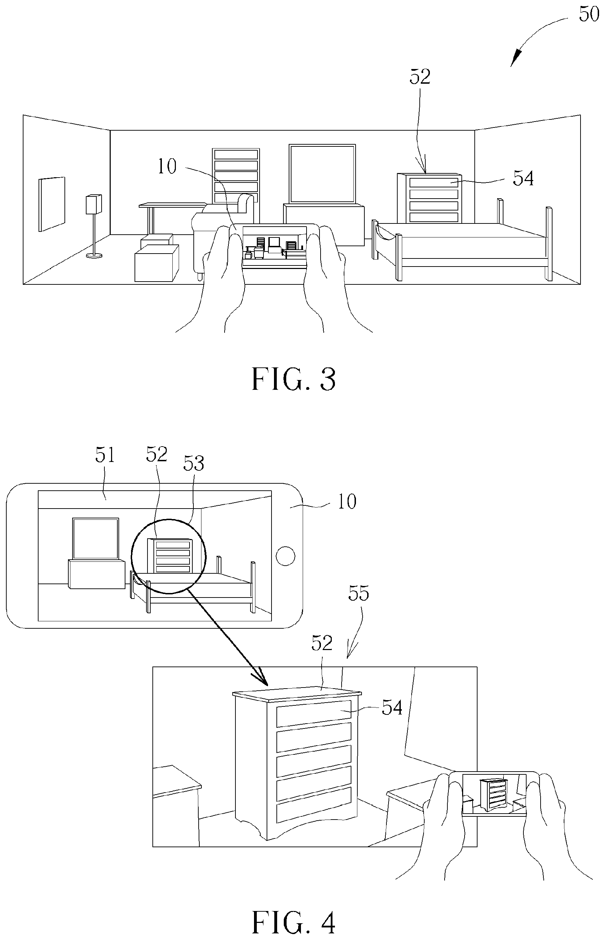

A description of using the Smart Finding app 22 will be given below. Please refer to Fig. 3. Fig. 3 illustrates using the mobile computing device 10 to take a picture of a room 50. The camera 14 of the mobile computing device 10 takes a picture of the room 50 in order to create a folder corresponding to the room 50. A folder structure for the room 50 could be similar to the sample folder structure shown in Fig. 2. Either a single picture or a series of pictures stitched together as a panoramic picture are taken of the room 50. This picture record of the room 50 is then analyzed and stored in order to become a record of the arrangement of household items within the room 50. As shown in Fig. 3, the room 50 contains a dresser 52 containing multiple drawers. A top drawer 54 of the dresser 52 will be discussed below.

Please refer to Fig. 4. Fig. 4 illustrates taking a detailed picture of the dresser 52 using the Smart Finding app 22. In the picture taken of the room 50, the user uses the mobile computing device 10 to zoom in to produce a zoomed-in picture 51 of the room 50 as shown in the upper-left side of Fig. 4. Using the zoomed-in picture 51 of the room 50, the user is better able to see the dresser 52. To add the dresser 52 as an item to be categorized in the Smart Finding app 22, the user simply has to tap on the dresser 52 using the display 12 of the mobile computing device 10. A circle 53 can then optionally appear in order to indicate that the dresser 52 has been selected. Next, the user takes a detailed picture 55 of the dresser 52 in order to provide a more detailed view of the dresser 52. The dresser 52 can then be optionally labeled either manually or using the identification service accessed through the cloud. Using the concept illustrated in the sample folder structure shown in Fig. 2, the room 50 would correspond to a folder that in turn contains a subfolder corresponding to the dresser 52. The dresser 52 would correspond to a folder that contained other subfolders such as the drawer 54 and other drawers of the dresser 52. Drawer 54 (as well as each of the other drawers) could also be thought of as a folder containing other items within the drawer 54. In general, storage units can be thought of as folders and other items that are not storage units can be thought of as files within a folder. There is no limit to the nesting level of how many folder levels there can be. The process of tapping on an item, taking a detailed picture of the item, and optionally labeling the item can be repeated until all items that the user wishes to catalog have already been cataloged.

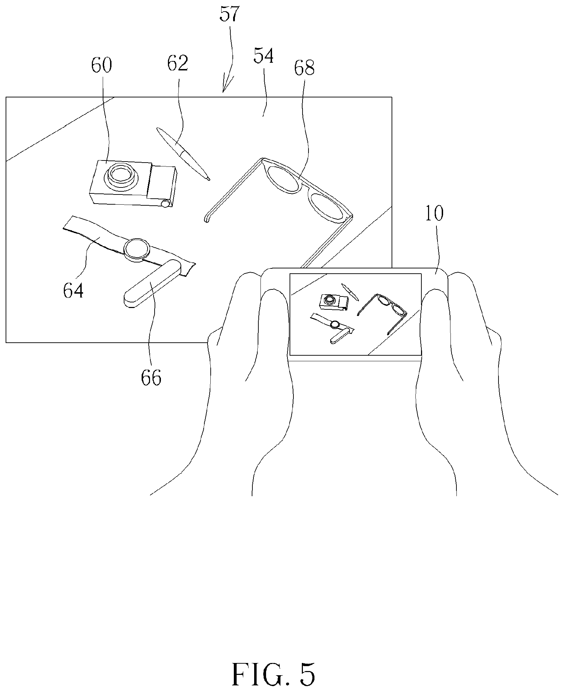

Please refer to Fig. 5 together with Fig. 4. In Fig. 4, the drawer 54 can be tapped to select the drawer 54. Then a detailed picture of the drawer 54 can be taken. Fig. 5 illustrates taking a detailed picture 57 of the drawer 54 using the Smart Finding app 22. The drawer 54 contains a digital camera 60, a pen 62, a wristwatch 64, a pocketknife 66, and a pair of eyeglasses 68. Each of these items can in turn be tapped on for selecting the item, followed by taking a detailed picture of each item and optionally labeling the item. Again, using the concept illustrated in the sample folder structure shown in Fig. 2, the drawer 54 would be a folder within the folder corresponding to the dresser 52. Inside the drawer 54 would be files corresponding to the digital camera 60, the pen 62, the wristwatch 64, the pocketknife 66, and the pair of eyeglasses 68. Each item would be optionally labeled either manually or using the identification service accessed through the cloud.

Incidentally, once a storage unit, such as the dresser 52, and all of its contents have been fully cataloged, moving the storage unit from one room to another within a house can be performed easily if furniture is rearranged in a house. In this situation, the user could simply take a picture of the room that previously had the storage unit, and then take a picture of the room that now has the storage unit placed in it. The moved storage unit would be automatically identified by the identification service accessed through the cloud, and all of the items that were previously located within the storage unit would still be preserved when the storage unit is moved from one room to another unless the user specified otherwise.

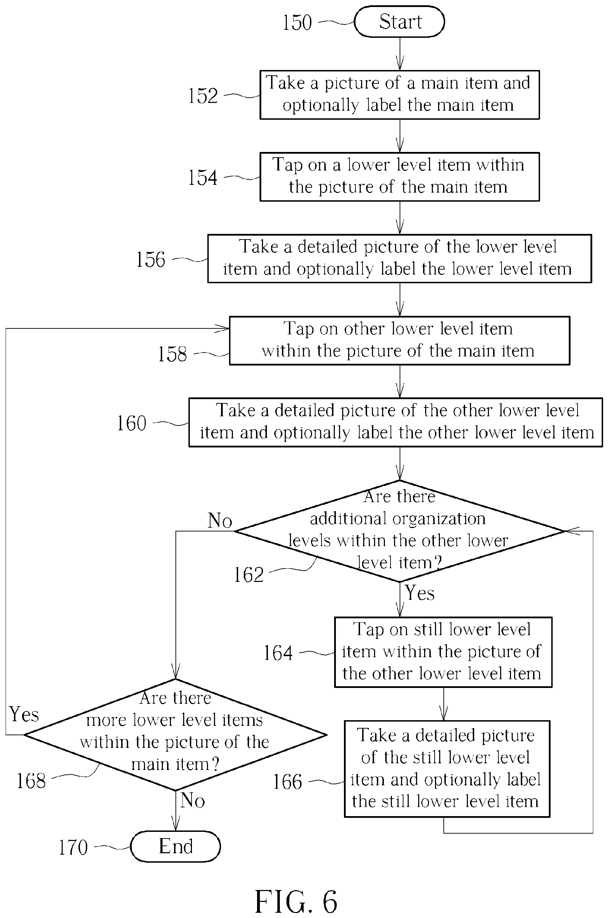

Please refer to Fig. 6. Fig. 6 is a flowchart describing the method of organizing items in a hierarchal manner using the Smart Finding app 22 according to the present invention. General steps of the method are described, and this method is scalable to any nested hierarchy level. New items can be added by executing the steps of the flowchart in a recursive manner. Steps in the flowchart will be explained as follows.

Step 150: Start.

Step 152: Take a picture of a main item and optionally label the main item. For example, the main item in this case could be the room 50 shown in Fig. 3.

Step 154: Tap on a lower level item within the picture of the main item. For example, the user taps on the dresser 52 in Fig. 4.

Step 156: Take a detailed picture of the lower level item and optionally label the lower level item. For example, the user takes a detailed picture of the dresser 52 in Fig. 4 and later optionally labels the dresser 52 manually or using the identification service accessed through the cloud.

Step 158: Tap on other lower level item within the picture of the main item. For example, the user could also catalog other items within the room 50 shown in Fig. 3.

Step 160: Take a detailed picture of the other lower level item and optionally label the other lower level item.

Step 162: Determine if there are additional organization levels within the other lower level item. If so, go to step 164. If not, go to step 168. For example, if the other lower level item is a cabinet that contains other items within the cabinet, then step 164 can be followed.

Step 164: Tap on still lower level item within the picture of the other lower level item. For example, this step would be followed when selecting items contained within the cabinet.

Step 166: Take a detailed picture of the still lower level item and optionally label the still lower level item. For example, this step would be followed when cataloging the items contained within the cabinet. Go back to step 162.

Step 168: Determine if there are more lower level items within the picture of the main item. For example, determine if there are other items within the room 50 shown in Fig. 3. If so, go back to step 158 and select the additional items. If not, go to step 170.

Step 170: End.

When labeling an item manually, the user of the Smart Finding app 22 can manually type in information such as the type of item, the manufacturer, the model number, and so on. When using the identification service accessed through the cloud, the identification service uses a cloud database to compare pictures of items that were taken by the user to pictures already stored in the cloud database. Entries in the cloud database matching the pictures taken by the user can then be located. Furthermore, the user supplied data can be used to further expand the cloud database content. That is, the additional pictures taken by the user can be further associated with the matching item in order to provide more pictures of that item. If the user is adding a new item to the cloud database, then the user supplied data will add a new entry to the cloud database. In general, the more pictures there are in the cloud database associated with an item, the easier it will be to match new pictures that a user takes of an object with pictures already contained in the cloud database. As the content stored within the cloud database becomes fuller, the cloud database will be able to accurately identify items that users take pictures of.

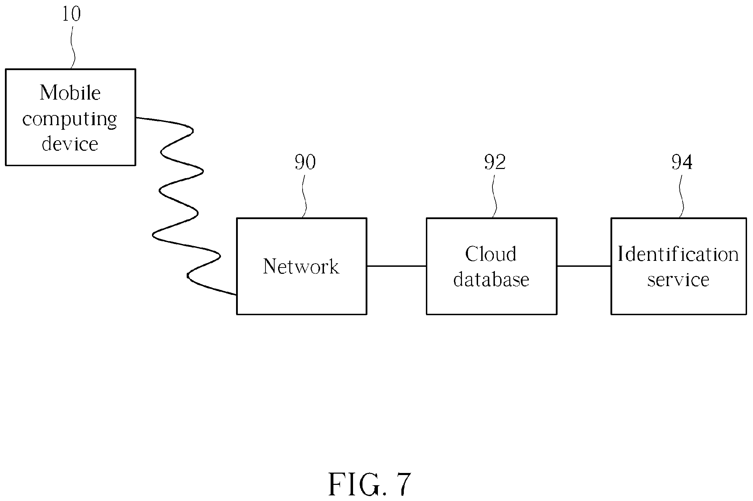

Please refer to Fig. 7. Fig. 7 is a functional block diagram illustrating interaction between the mobile computing device 10 and a cloud database 92, and an identification service 94 via a network 90. The mobile computing device 10 is preferably connected to the network 90 wirelessly, and may use the wireless transceiver 18 to establish this wireless connection. The cloud database 92 is used to store information used to help identify items the user is storing. The identification service 94 works in conjunction with the cloud database 92 in order to help identify the items contained in pictures taken by the user.

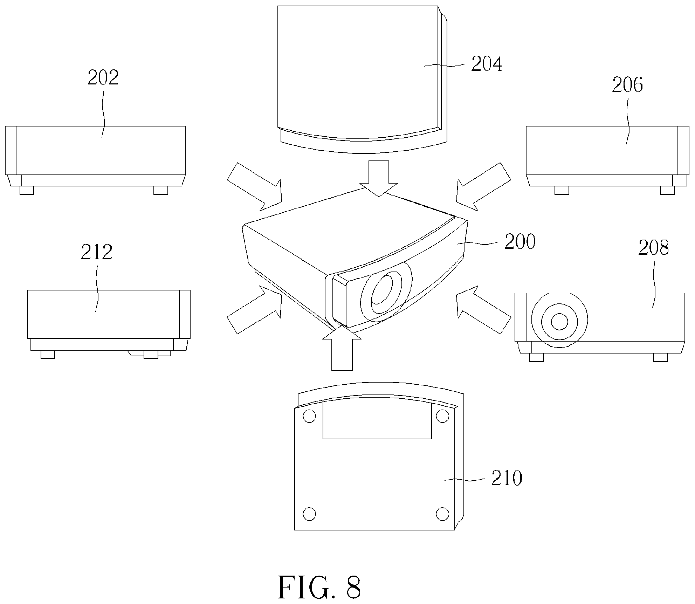

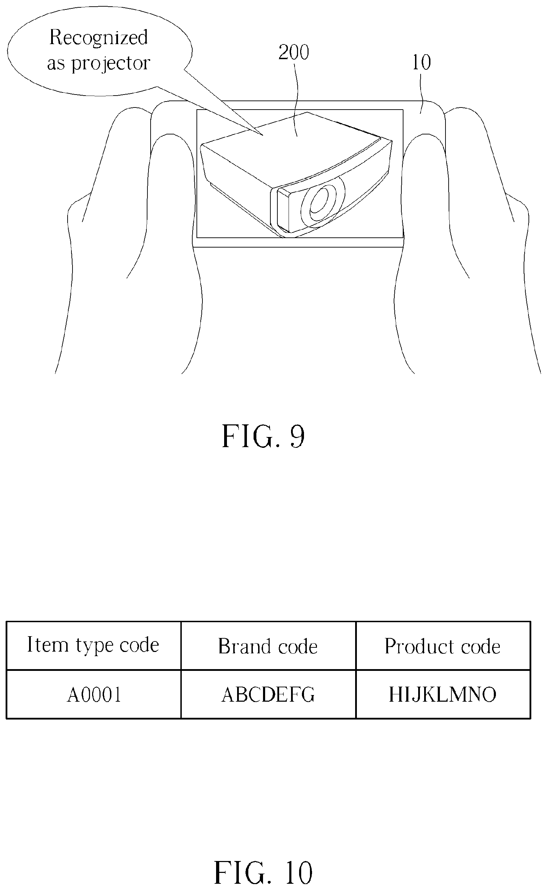

Please refer to Fig. 8. Fig. 8 illustrates adding a new entry to the cloud database 92 by taking multiple pictures 202, 204, 206, 208, 210, 212 of an item 200. In this example, the item 200 is a projector. If a user's item 200 is not found by in the cloud database 92, the Smart Finding app 22 can provide the user with the chance to create a file for the item 200. The user can take a picture from each side, such as six different sides, of the item 200 to create the multiple pictures 202, 204, 206, 208, 210, 212. Afterwards the Smart Finding app 22 can combine these multiple pictures 202, 204, 206, 208, 210, 212 of the item 200 together in order to create a simple three-dimensional model for that item 200. Having multiple pictures taken of the item 200 can help with future attempts at image recognition performed using the cloud database 92 and the identification service 94. The user can then provide identifying information and category information for the item 200, and the item 200 is then added to the cloud database 92. A file corresponding to the created item 200 can be used by the user to identify the item 200. The file can also be shared with others through the cloud database 92. Through this sharing system using the cloud database 92, files contributed by other users can also be used to increase the accuracy of the identification process. Please refer to Fig. 9. Fig. 9 shows the item 200 being recognized after a file corresponding to the item 200 is added to the cloud database 92. In this example, the camera 14 of the mobile computing device 10 takes a picture of the item 200, and after the Smart Finding app 22 sends this picture to the cloud database 92, the cloud database 92 returns the result that the item 200 is a projector.

When creating the file for each item, the item will be assigned an identification (ID) code according to the information provided. Each of the fields in the ID code can be independently searchable in the event the user wishes to search for the item in the future. Please refer to Fig. 10. Fig. 10 illustrates a table containing fields in the ID code. The table contains an "item type code" identifying the category type of the item as "A0001 ", a "brand code" corresponding to the brand of the item is "ABCDEFG", and a "product ID code" corresponding to the product ID indicating the model of the item "HIJKLMNO". The ID code is the same for any given model item. For example, if a user has matching end tables on either side of a bed, both end tables would have the same ID code.

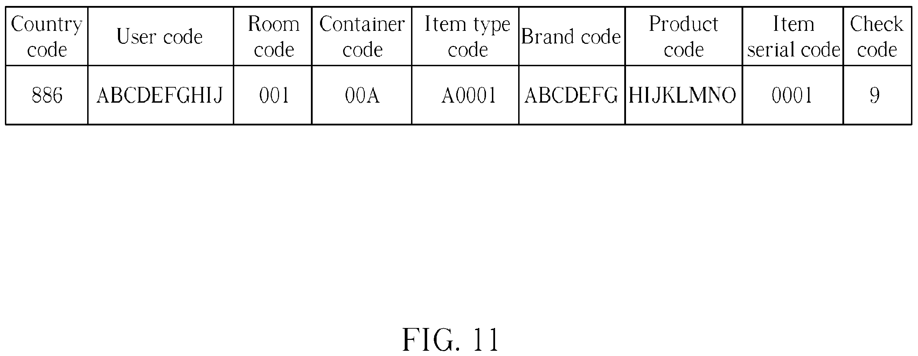

In addition to being assigned an ID code, each item in the Smart Finding app 22 will be assigned its own unique identification (UID) number. Please refer to Fig. 11. Fig. 11 illustrates a table containing fields in the UID number. Each UID number will contain series of codes according to the location and the type of the item. For example, the item having the ID code shown in Fig. 10 can be assigned the following codes. The UID number contains the following information: a "country code" corresponding to the country where the item is located is "886", a "user code" corresponding to the user cataloging the item is "ABCDEFGHIJ", a "room code" corresponding to the room where the item is located is "001 ", a "container code" corresponding to the storage unit where the item is located is "00A", the "item type code" identifying the category type of the item is "A0001 ", the "brand code" corresponding to the brand of the item is "ABCDEFG", the "product ID code" corresponding to the product ID indicating the model of the item is "HIJKLMNO", an "item serial number" identifying the item using a unique serial number is "0001", and a "check code" used as a checksum for the rest of the codes in the UID is "9". In the Smart Finding app 22, each unique item will be given a UID number. Even two identical end tables would have different UID numbers since the item serial numbers would be different for each end table. When searching for a missing item, any of the fields in the UID number can be searched, thereby making it very easy to find the item being searched for. As described above, each item can be located and assigned a UID number. Each item in a region (such as a house) can be assigned an ID code, as shown in Fig. 10, and then the item's location and the unique serial number can be added to produce the UID number shown in Fig. 11. For each region, an extra identifier can be used for relating and connecting all items within different regions.

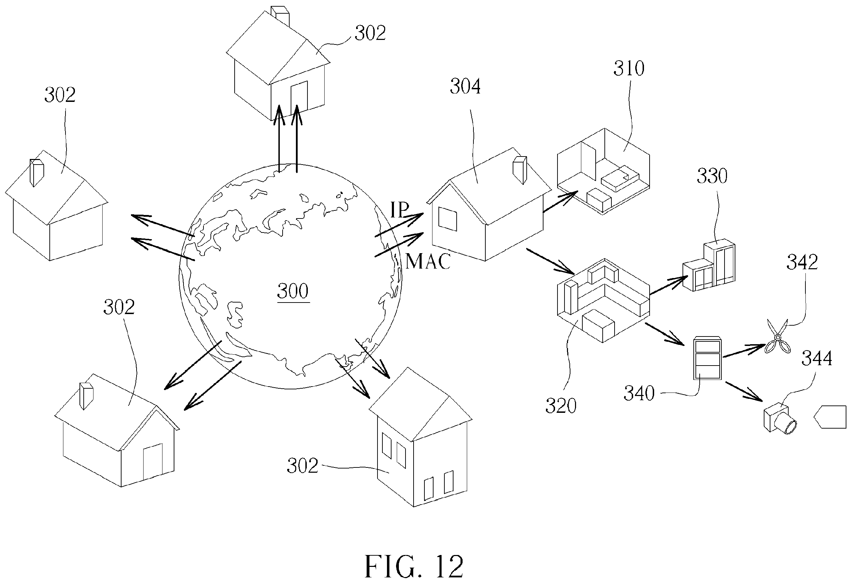

In order to relate regions to one another, existing technology can be used. For example, if a house has an internet connection, the house may be assigned a static Internet Protocol (IP) address or a unique media access control (MAC) address in order to accurately identify the house. Using these technologies, different regions can be clearly distinguished from one another. Please refer to Fig. 12. Fig. 12 shows a method of identifying individual houses using either an IP address or a MAC address. Across the world 300, there are numerous houses 302, 304, with the house 304 being used as an example. The house 304 contains rooms 310 and 320. Room 320 contains items 330 and 340. Item 340 is a storage unit that further contains items 342 and 344. Each item in a region will have its own UID number, and each item's UID number can be seen as an extension of the place code assigned to the item's corresponding region. A place code of a larger area can be added to the place code of a smaller area, and then all regions within a larger area can be accurately identified. Therefore, the item 344 shown in Fig. 12 could be identified using either the IP address or the MAC address of the house 304 in conjunction with the UID number of item 304.

One of the benefits of cataloging items using the Smart Finding app 22 is for aiding users in later locating the items. If a user is looking for a missing item that has a fixed location or that is not often moved around, and the user has simply forgotten where the missing item is, the user can search for the missing item using fields of the ID code as shown in Fig. 10 or using fields of the UID number shown in Fig. 11. The Smart Finding app 22 can then inform the user where the missing item is according to the location the missing item was at when the missing item was cataloged. This works well for items that have fixed or relatively fixed locations. However, some items that are moved around often, such as a camera or a mobile phone, are not suitable for being located in this way because the storage location of those items would need to be frequently updated. Therefore, a radio frequency identification (RFID) tag can be used for tracking these types of items. For those items that will be moved often, a unique RFID tag can be affixed to each of those items. When a user cannot find a missing item that has an affixed RFID tag, the user can use a RFID scanner to search for the missing item within a region.

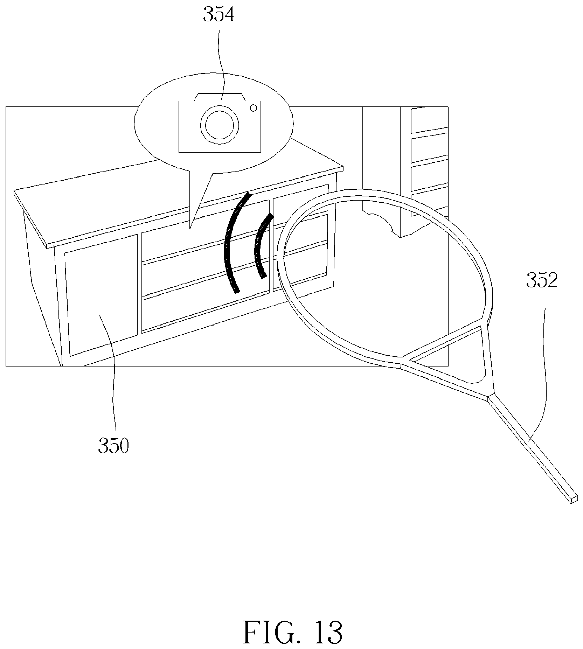

Please refer to Fig. 13. Fig. 13 illustrates using an RFID scanner 352 to search for a camera 354. In this example, the user may have an idea of which room the camera 354 might be in, but the user is unsure exactly where the camera 354 is within the room. If the camera 354 is within a drawer of a dresser 350, the user is unable to see the camera 354 without inspecting every drawer of the dresser 350. Therefore, the user can use the RFID scanner 352 to scan an area more quickly. In order to do this, the user would first input into the Smart Finding app 22 what item is being searched for. The user can do this by entering data from fields of the ID code as shown in Fig. 10 or fields of the UID number shown in Fig. 11. The Smart Finding app 22 will then know what missing item the user is looking for as well as the corresponding RFID tag information. Then, when the RFID scanner 352 is used to search for the missing item, the Smart Finding app 22 will alert the user when the RFID tag corresponding to the missing item is found when the RFID scanner 352 is within close range of the missing item. Preferably the RFID scanner 352 is a handheld RFID scanner. As a non-limiting example, the RFID scanner 352 illustrated in Fig. 13 is a shown as being a racquet-shaped RFID scanner. Please note that the RFID scanner 352 could also be used to scan items that are not currently part of the cloud database 92. When an item that is not cataloged in the cloud database 92 is scanned with the RFID scanner 352, the user can be given the opportunity to add this item using the Smart Finding app 22.

In summary, the present invention Smart Finding app 22 provides a way for intuitively organizing items in a hierarchal system. Not only are the items and their locations recorded, but pictures are also used to graphically show the relative locations of stored items. This provides a user-friendly operation method when adding new items or when searching for previously stored items. The user is able to search for a missing item by looking up a last known location of the missing item, or by using an RFID scanner to search for a missing item that has an RFID tag attached to the missing item.

## Claims

1. A method of tracking locations of stored items, **characterized by**:
taking a picture of a first room using a camera (14) of a mobile computing device (10) to create a first corresponding image depicting contents of items stored within the first room and the relative locations of the items stored within the first room;
tapping on a first selected item depicted in the first corresponding image;
taking a detailed picture of the first selected item;
tapping on a second selected item depicted in the first corresponding image;
taking a detailed picture of the second selected item; and
storing the picture of the first room, the detailed picture of the first selected item, and the detailed picture of the second selected item in a storage device (20) of the mobile computing device (10).

2. The method of claim 1, further **characterized in that** taking the picture of the first room using the camera (14) of the mobile computing device (10) to create the first corresponding image comprises taking multiple pictures of the first room with the camera (14) of the mobile computing device (10) and stitching the pictures together to create the first corresponding image being a panoramic image.

3. The method of claim 1, further **characterized by**:
labeling the first room;
labeling the first selected item;
labeling the second selected item; and
storing the labels of the first room, the first selected item, and the second selected item in the storage device (20) of the mobile computing device (10).

4. The method of claim 3, further **characterized in that** the first selected item is labeled manually by a user of the mobile computing device (10).

5. The method of claim 3, further **characterized in that** the first selected item is labeled automatically using an identification service accessed through the "cloud".

6. The method of claim 3, further **characterized by**:
searching for a missing item by entering all or part of the label corresponding to the missing item into the mobile computing device (10); and
the mobile computing device (10) indicating a location of the missing item.

7. The method of claim 3, further **characterized by**:
adding a radio frequency identification (RFID) tag to items stored within the first room;
searching for a missing item by entering all or part of the label corresponding to the missing item into the mobile computing device, the missing item having a corresponding RFID tag; and
using an RFID scanner (352) to search for the missing item, and alerting a user of the mobile computing device (10) when the RFID tag corresponding to the missing item is found.

8. The method of claim 1, further **characterized in that** the second selected item is a storage unit storing other items within the second selected item.

9. The method of claim 8, further **characterized by**:
taking a detailed picture of a storage space within the second selected item;
tapping on individual items stored within the storage space; and
taking respective detailed pictures of the individual items stored within the storage space.

10. The method of claim 9, further **characterized by**:
labeling the storage space within the second selected item; and
labeling the individual items stored within the storage space.

11. The method of claim 1, further **characterized in that** the first selected item and the second selected item are each assigned an identification (ID) code in order to identify a product type for each of the first selected item and the second selected item.

12. The method of claim 1, further **characterized in that** the first selected item and the second selected item are each assigned a unique identification (UID) code in order to identify a location, a user code, a product type, and a serial number for each of the first selected item and the second selected item.

13. The method of claim 12, further **characterized in that** the first room is located inside a home that is assigned a code according to a unique media access control (MAC) address or a static Internet Protocol (IP) address corresponding to the home.

14. The method of claim 1, further **characterized by**:
taking a picture of a second room using the camera (14) of the mobile computing device (10) to create a second corresponding image depicting contents of items stored within the second room and the relative locations of the items stored within the second room;
tapping on a third selected item depicted in the second corresponding image;
and
taking a detailed picture of the third selected item.

15. The method of claim 14, further **characterized by** labeling the third selected item.
